(19) Europäisches Patentamt / European Patent Office / Office européen des brevets

(11) **EP 3 746 343 B1**

(12) **FASCICULE DE BREVET EUROPEEN**

(45) Date de publication et mention de la délivrance du brevet:
**06.03.2024 Bulletin 2024/10**

(21) Numéro de dépôt: **19703957.1**

(22) Date de dépôt: **24.01.2019**

(51) Classification Internationale des Brevets (IPC):
**B60W 30/06** *(2006.01)* **B62D 15/02** *(2006.01)*

(52) Classification Coopérative des Brevets (CPC):
**B60W 30/06; B60W 30/18063; B62D 15/0285;**
B60W 2050/0008; B60W 2520/10; B60W 2530/18;
B60W 2554/00

(86) Numéro de dépôt international:
**PCT/EP2019/051774**

(87) Numéro de publication internationale:
**WO 2019/149618 (08.08.2019 Gazette 2019/32)**

(54) **SYSTÈME ET PROCÉDÉ DE COMMANDE D'UN VÉHICULE AUTOMOBILE POUR LE FRANCHISSEMENT D'UN OBSTACLE BAS**

SYSTEM UND VERFAHREN ZUR STEUERUNG EINES KRAFTFAHRZEUGS ZUR ÜBERWINDUNG EINES NIEDRIGEN HINDERNISSES

SYSTEM AND METHOD FOR CONTROLLING A MOTOR VEHICLE FOR OVERCOMING A LOW OBSTACLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2018 FR 1850780**

(43) Date de publication de la demande:
**09.12.2020 Bulletin 2020/50**

(73) Titulaire: **Renault s.a.s**
**92100 Boulogne Billancourt (FR)**

(72) Inventeurs:
• **MARTIN, Guillaume**
**78000 VERSAILLES (FR)**

• **KOO, Jong-Hoon**
**92800 Puteaux (FR)**
• **SENE, Pape-Abdoulaye**
**78000 VERSAILLES (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 2 327 574      EP-A1- 3 219 582**
**DE-A1-102013 210 672**

**Description**

L'invention a pour domaine technique la commande d'un véhicule automobile afin de réaliser la mise en parking dudit véhicule.

Un système de parking automatisé ou semi-automatisé est basé sur un système de détection de l'environnement (détection des places libres et obstacles) à base de capteurs à ultrasons et/ou de caméras.

Une première difficulté technique est que ce système de perception possède à ce jour de nombreuses limites quant à la détection d'obstacles bas de type trottoir. Il existe un seuil de hauteur d'obstacles que le système de perception est capable de détecter lors de la phase de recherche de place. Si cet obstacle bas est en dessus de ce seuil, la manoeuvre s'effectue avec une trajectoire qui évitera de franchir l'obstacle. Par exemple, dans le cas d'une manoeuvre de parking parallèle le véhicule se gare de telle sorte que les roues intérieures soient parallèles à l'obstacle. Si une telle trajectoire n'est pas possible, la place ne sera pas proposée par le système. L'implémentation actuelle du système conduit donc à des situations problématiques, notamment dans le cas de places de parking à cheval entre le trottoir et la route.

Une deuxième difficulté technique est liée au fait qu'on dispose d'un régulateur de vitesse en boucle fermée chargé de déplacer le véhicule d'une position donnée vers la place de parking sélectionnée par le conducteur ou le système de parking. De ce fait, en cas de non détection de l'obstacle bas de type trottoir, le système se retrouve bloqué, le régulateur envoyant une requête de couple au moteur dans la limite des valeurs acceptées du fait de la saturation pour répondre à la consigne de vitesse. Une telle saturation de la boucle de contrôle est nécessaire pour éviter toute violation des contraintes liées à la sécurité de la manoeuvre, le véhicule est effectivement bloqué contre un tel obstacle bas de type trottoir.

Une solution consisterait à augmenter la limitation haute de la saturation. Le risque de cette solution serait le bond du véhicule lors du passage de l'obstacle bas pouvant mener à une collision avec les objets autour du véhicule.

Un tel risque n'est pas acceptable. Il existe donc un besoin pour une stratégie robuste permettant de détecter lors de la manoeuvre que la voiture est bloquée sur un obstacle bas de type trottoir présent sur la trajectoire calculée par le système de perception, de franchir l'obstacle de façon sécurisée, puis de reprendre la trajectoire initiale calculée par le système de perception.

De l'état de la technique, on connaît le document KR20130089502 qui décrit un système d'aide au stationnement, prévoyant de détecter un trottoir sur un espace de stationnement et d'en reconnaître la forme afin d'améliorer la précision du stationnement automatique.

Le document EP3219582 décrit un procédé de stationnement semi-automatique ou automatique d'un véhicule automobile dans une place de stationnement, dans lequel la consigne de couple est augmentée progressivement à chaque échec de franchissement de l'obstacle bas, jusqu'à ce qu'il soit détecté que le franchissement est effectif.

On connaît également le document US2016207528 qui décrit un procédé d'exécution de manoeuvre autonome d'un véhicule via une commande vocale de l'utilisateur. Lorsqu'au moins une roue du véhicule rencontre un obstacle vertical (de type trottoir) qui n'a pas été détecté par les capteurs qui fournissent les informations au système, le système d'assistance entre dans un mode de fonctionnement dans lequel la consigne de vitesse est augmentée pendant la manoeuvre de sorte à ce qu'elle soit plus adaptée à faire face à l'obstacle.

On connaît également les documents DE 10 2013 210672 A1 et EP 2 327 574 A1.

Les documents cités ne résolvent pas le problème technique tel que décrit plus haut.

L'invention a pour objet un système de commande d'un véhicule automobile selon la revendication 1 et un procédé de commande d'un véhicule automobile selon la revendication 3.

Des modes de réalisation préférés sont définis par les revendications dépendantes.

En plus de multiplier les scénarios d'éligibilité d'assistance au stationnement, cette solution présente l'avantage de s'inscrire dans l'architecture préexistante. Elle nécessite par conséquent peu de ressources supplémentaires, tant en terme de traitement que de capteurs proprioceptifs du fait de leur présence dans les véhicules selon l'architecture préexistante.

La détection est également robuste au type de route notamment celles présentant une pente.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principales étapes de fonctionnement d'un régulateur principal selon l'état de la technique antérieure,
- la figure 2 illustre les principaux éléments d'un système de commande du franchissement d'un obstacle bas,
- la figure 3 illustre les principaux éléments d'un moyen de détection de trottoir, et
- la figure 4 illustre les principaux éléments d'un moyen de commande de franchissement de trottoir.

L'invention concerne une stratégie de détection de blocage d'un véhicule contre un obstacle bas lors d'une manoeuvre de parking semi-automatisée ou automatisée. Par obstacle bas, on entend notamment un trottoir ou tout obstacle pouvant être franchi par le véhicule. A la suite de cette détection, un procédé de franchissement dudit obstacle bas est mis en place. Ce module s'intègre dans une loi de commande basée sur un régulateur adaptatif à plusieurs états. Ce régulateur est constitué de phases de passage d'une régulation en boucle ouverte à de la régulation en boucle fermée.

La difficulté technique principale est la détection d'un vrai blocage contre un obstacle bas lors de la manoeuvre afin d'éviter des fausses détections. La stratégie de détection doit par conséquent être robuste à ce type de situation. Il faut être en mesure de discriminer un arrêt de véhicule décidé par le conducteur d'un arrêt involontaire mais également de discriminer un blocage contre un obstacle bas d'un décollage du véhicule lorsque la manoeuvre se déroule sur une route présentant une pente. L'autre difficulté est bien entendu le franchissement qui doit être rapide et sécurisé. Il faut éviter tout bond en fin de passage pouvant mener à une collision. Enfin, la détection et le franchissement de l'obstacle bas lors d'une manoeuvre de parking doit s'intégrer dans une loi de commande plus globale de régulation de la vitesse longitudinale du véhicule lors d'une manoeuvre. Il est donc nécessaire d'assurer une bonne synchronisation et une bonne commutation entre le régulateur et le module présenté dans cette invention.

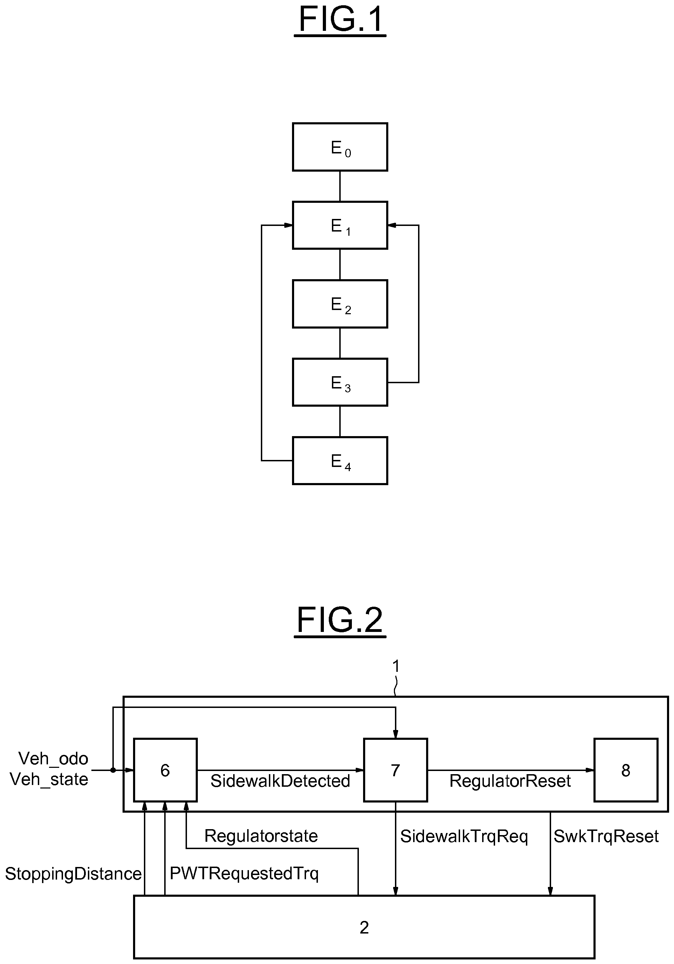

Une telle loi de commande de régulation de vitesse est décrite dans la demande de brevet Français FR1751873 déposée le 08 Mars 2017 au nom de Renault s.a.s. Cette demande décrit un contrôleur multi-état d'aide au stationnement d'un véhicule automobile et dans lequel s'inscrit le système de commande d'un véhicule automobile pour le franchissement d'un obstacle bas. Le contrôleur comprend cinq états principaux notés E1 à E5 illustrés par la figure 1.

Le système de commande 1 du franchissement d'un obstacle bas n'est actif que pendant la régulation de la vitesse du véhicule correspondant à l'étape E3 débutant à la fin de l'annulation complète de la consigne d'accélération ou lorsque le système d'aide au stationnement détecte un mouvement du véhicule. Dans la suite de la description, le terme régulateur principal est employé pour faire référence au contrôleur multi-état selon cette demande de brevet.

Le fonctionnement du système de commande 1 de franchissement d'un obstacle bas entraîne la mise en pause du fonctionnement du régulateur principal 2 tel que décrit dans la demande de brevet Français FR1751873

Le système de commande 1 de franchissement d'un obstacle bas, illustré par la figure 2, comprend un moyen de détection 6 d'obstacle bas, connecté à un moyen de commande 7 de franchissement de l'obstacle bas, connecté lui-même à un moyen d'initialisation 8 du régulateur principal. Ce dernier assure une fonction de mise en pause du régulateur principal ainsi qu'une fonction d'initialisation du même régulateur pour la reprise de la manoeuvre en cours. Le moyen d'initialisation 8 du régulateur principal reçoit en entrée le signal de détection d'obstacle bas référencé SidewalkDetected. Le moyen d'initialisation 8 détecte la commutation de ce signal vers une première valeur lorsque la voiture est bloquée sur un obstacle bas de type trottoir ce qui déclenche la mise en pause du régulateur principale. Par la suite, sur réception du signal ResetPIDFFD/TakeOff qui prend une première valeur suite à la détection du franchissement effectif de l'obstacle bas, la réinitialisation du régulateur principale par le moyen d'initialisation 8 s'effectue.

Le système de commande 1 de franchissement d'un obstacle bas reçoit en entrée l'odométrie du véhicule Veh_odo, la vitesse estimée du véhicule Veh_speed, ainsi que les informations relatives au régulateur principal tel que l'état du régulateur principal RegulatorState, la requête de couple à la roue PWTRequestedTrq calculée par le régulateur principal et la distance d'arrêt StoppingDi stance.

Le moyen de détection 6 d'obstacle bas génère un signal de détection d'obstacle bas référencé SidewalkDetected qui prend une première valeur lorsque la voiture est bloquée sur un obstacle bas de type trottoir. Ce signal est alors utilisé par un moyen de commande 7 de franchissement d'obstacle bas qui a pour rôle d'initialiser un contrôleur de vitesse compris dans le régulateur principal 2 afin de garantir la synchronisation et de calculer le couple moteur qu'il faut délivrer afin de passer l'obstacle bas et enfin de déterminer le franchissement effectif de l'obstacle bas et la réinitialisation du régulateur de vitesse principale pour la reprise de la manoeuvre en cours. La synchronisation est assurée par une vérification de l'étape de fonctionnement réalisée par le régulateur principal, la mise en pause du régulateur principal afin d'activer le système de commande 1 de franchissement d'un obstacle bas et la reprise lorsque le système de commande 1 de franchissement d'un obstacle bas a terminé ses traitements.

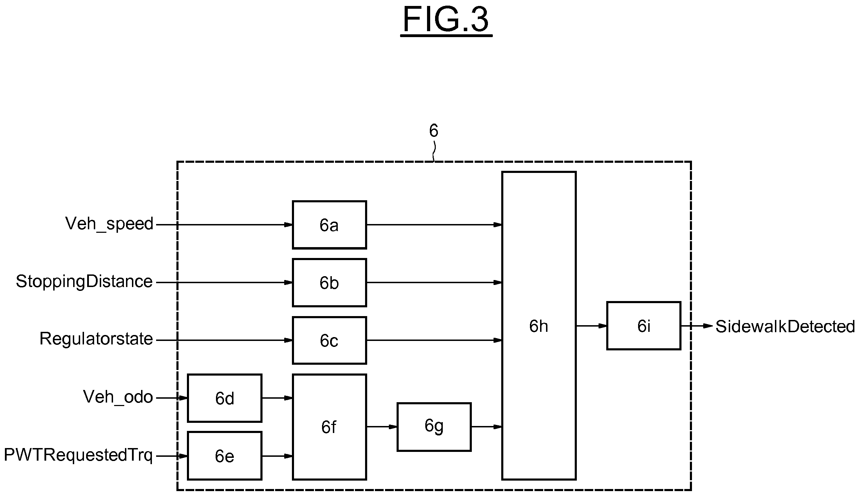

Le moyen de détection 6 d'obstacle bas, illustré par la figure 3, reçoit la vitesse du véhicule Veh_speed, l'odométrie Veh_odo, la requête de couple à la roue PWTRequestedTrq ainsi que l'état du régulateur principal RegulatorState. Par odométrie, on entend un capteur de déplacement du véhicule du type « top roue » émettant une impulsion à chaque passage d'un repère fixé sur la roue devant un détecteur fixe. Le périmètre de la roue étant connu, on connaît la distance parcourue sur un tour de roue entre deux impulsions. L'odométrie comprend également un capteur de direction permettant de déterminer si le déplacement est dirigé vers l'avant ou vers l'arrière du véhicule. Un maintien à l'arrêt du véhicule est déterminé lorsque le déplacement du véhicule est sensiblement nul, c'est-à-dire inférieur à une valeur de seuil pendant une durée prédéterminée.

Enfin, l'état du régulateur principal 2 RegulatorState correspond à l'étape courante du régulateur principal 2 illustrée sur la figure 1, parmi les étapes $E_0$ à $E_4$.

Le moyen de détection 6 d'obstacle bas comprend plusieurs moyens de détection 6a,6b,6c,6d,6e.

Le moyen de détection 6a de vitesse compare la vitesse estimée Veh_speed du véhicule à une vitesse de

seuil $V_{th}$. Afin de déterminer si la condition suivante est vérifiée.

$$Veh\_speed < V_{th} \qquad\qquad (Eq.\ 1)$$

Ainsi lorsque la vitesse estimée Veh_speed devient inférieure à une vitesse de seuil $V_{th}$ (choisi faible), le moyen de détection 6a de vitesse émet en sortie une première valeur.

La vitesse estimée Veh_speed est calculée sur la base des données odométriques présentes sur le bus CAN du véhicule, comprenant les tops roue correspondant au passage d'un indicateur de position sur au moins une roue. Le principe repose sur le calcul du temps $T_{2tops}$ écoulé entre l'apparition de deux tops roues. Pour chaque véhicule, on connaît exactement la distance $Dist_{2tops}$ qui sépare deux tops roues consécutifs. On en déduit la vitesse estimée grâce au calcul suivant :

$$Veh\_speed = \left(Dist_{2tops}\right) / T_{2tops} \qquad\qquad (Eq.\ 2)$$

Le moyen de détection 6b de la distance restante reçoit en entrée la distance restante à parcourir StoppingDistance par le véhicule reçue du système de perception et de calcul de la trajectoire et la compare à un seuil de distance restante à parcourir $RemainingDist_{Th}$ afin de vérifier si la condition suivante est réalisée :

$$StoppingDistance > RemainingDist_{Th} \qquad\qquad (Eq.\ 3)$$

Ainsi lorsque la distance restante à parcourir StoppingDistance devient supérieure au seuil de distance $RemainingDist_{Th}$, le moyen de détection 6b de la distance restante émet en sortie une première valeur. On arrive ainsi à discriminer toute détection d'obstacle bas de type trottoir lorsque l'on arrive en fin de place et qu'il ne reste plus qu'une distance inférieure ou égale au seuil de distance RemainingDist_Th à parcourir.

Dans le cas où un obstacle bas n'est pas détecté par le système et qu'il reste une distance inférieure ou égale au seuil de distance RemainingDist_Th (m) à parcourir, le moyen de détection 6b de la distance restante informe le régulateur principal 2 qu'il est impossible de poursuivre le mouvement dans ce sens. Par la suite le régulateur principal informe à son tour le système de perception et de calcul de la trajectoire de cette impossibilité auquel cas, la poursuite de la manoeuvre dans la direction opposée est évaluée par le système de perception et de calcul de la trajectoire.

Le moyen de détection 6c de condition d'état reçoit en entrée l'étape actuelle du régulateur notée RegulatorState. Le moyen de détection 6c de condition d'état détermine alors si le régulateur principal 2 est à l'étape $E_3$, illustrée sur la figure 1. Si tel est le cas, le moyen de détection 6c de condition d'état émet en sortie une première valeur.

Avec cette condition, on s'assure que la détection et le franchissement de l'obstacle ne sera pas actif en dehors des états où le contrôleur régule la vitesse du véhicule.

Le moyen de détection 6d de condition odométrique compare les données odométriques disponibles sur le bus CAN à des valeurs prédéfinies. Les données odométriques comprennent le top roue permettant de déterminer la distance parcourue, et le sens de déplacement afin de déterminer dans quel sens, avant ou arrière, chaque déplacement est réalisé. En fonction du résultat de la comparaison, on détermine si le véhicule est immobile et donc potentiellement bloqué contre un obstacle. Si tel est le cas, le moyen de détection 6d de condition odométrique émet en sortie une première valeur.

Le moyen de détection 6e de condition de requête de couple reçoit en entrée la requête de couple à la roue PWTRequestedTrq reçue du régulateur principal 2 et détermine si la requête de couple à la roue PWTRequestedTrq est supérieure à un seuil de requête de couple à la roue, afin de s'assurer de la volonté du conducteur ou du système de faire avancer le véhicule dans le sens du rapport engagé. Si tel est le cas, le moyen de détection 6e de condition de requête de couple émet en sortie une première valeur.

Dans un mode de réalisation, on détermine une requête compensée de couple à la roue égale à la composante horizontale de la requête de couple. Le choix du seuil de couple devient alors plus aisé.

Une porte logique ET référencée 6f reçoit en entrée les valeurs émises par le moyen de détection 6d de condition odométrique et le moyen de détection 6e de condition de requête de couple. La porte logique ET référencée 6f émet en sortie une première valeur lorsqu'une première valeur est reçue simultanément du moyen de détection 6d de condition odométrique et du moyen de détection 6e de condition de requête de couple. Dans les autres cas, la porte logique ET référencée 6f émet en sortie une deuxième valeur.

Un moyen de temporisation 6g connecté en sortie de la porte logique ET 6f détermine si le signal reçu de la porte logique ET correspond à une vérification simultanée de la condition odométrique et à la condition de requête de couple pendant une durée prédéterminée. En d'autres termes, le moyen de temporisation 6g détermine si la première valeur est reçue de la porte logique ET 6f pendant une durée prédéterminée.

Si tel est le cas, le moyen de temporisation 6g émet en sortie une première valeur. Sinon, le moyen de temporisation 6g émet une deuxième valeur.

Une deuxième porte logique ET référencée 6h reçoit en entrée les valeurs émises par le moyen de détection 6a de vitesse, le moyen de détection 6b de la distance restante, le moyen de détection 6c de condition d'état et le moyen de temporisation 6g.

La deuxième porte logique ET référencée 6h émet en sortie une première valeur lorsqu'une première valeur est reçue simultanément du moyen de détection 6a de vitesse, du moyen de détection 6b de la distance restante, du moyen de détection 6c de condition d'état et du moyen de temporisation 6g. Dans les autres cas, la deuxième porte logique ET référencée 6h émet en sortie une deuxième valeur.

Un deuxième moyen de temporisation 6i connecté en sortie de la deuxième porte logique ET 6h détermine si le signal reçu de la deuxième porte logique ET 6h correspond à la première valeur pendant une durée prédéterminée.

Si tel est le cas, le deuxième moyen de temporisation 6i émet en sortie une première valeur. Sinon, le deuxième moyen de temporisation 6i émet une deuxième valeur.

Le signal en sortie du deuxième moyen de temporisation 6i correspond à au signal de détection d'obstacle bas SidewalkDetected.

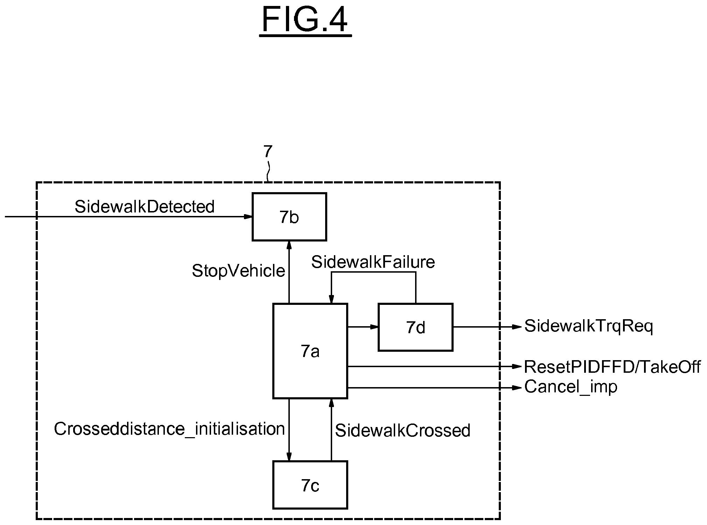

Le moyen de commande 7 de franchissement d'obstacle bas connecté en sortie du moyen de détection 6 d'obstacle bas et recevant le signal de détection d'obstacle bas SidewalkDetected va maintenant être décrit en relation avec la figure 4.

Le moyen de commande 7 de franchissement d'obstacle bas cadence toutes les actions après confirmation de la présence de l'obstacle par le moyen de détection 6 d'obstacle bas à travers le signal de détection d'obstacle bas SidewalkDetected.

Pour réaliser cela, le moyen de commande 7 de franchissement d'obstacle bas comprend un superviseur 7a recevant en entrée le signal de détection d'obstacle bas SidewalkDetected provenant du moyen de détection 6 d'obstacle bas.

Lorsque le signal de détection d'obstacle bas SidewalkDetected prend la première valeur, le superviseur 7a commande un moyen de commande 7b de l'arrêt du véhicule de sorte à émettre un ordre de freinage. Le moyen de commande 7b de l'arrêt du véhicule vérifie également l'état de freinage du véhicule via les informations du CAN, notamment si le véhicule est maintenu à l'arrêt.

Le superviseur 7a commande alors un moyen d'estimation 7c de distance de sorte à déterminer le franchissement effectif de l'obstacle bas en fonction de la distance parcourue et de la valeur d'initialisation Crosseddistance_initialisation transmise par le superviseur 7a.

Le moyen d'estimation 7c de distance transmet en retour un message sidewalk_crossed à destination du superviseur 7a indiquant le franchissement de l'obstacle bas, lorsque tel est le cas.

En parallèle de l'initialisation du moyen d'estimation 7c, le superviseur 7a commande un moyen de calcul 7d de couple moteur de sorte à initialiser le contrôleur de vitesse du régulateur principal 2. Une requête de couple moteur SidewalkTrqReq pour franchir l'obstacle bas est déterminée puis transmise au contrôleur de vitesse du régulateur principal dans le cadre de la synchronisation. En d'autres termes, la requête de couple moteur SidewalkTrqReq pour franchir l'obstacle bas est transmise au contrôleur de vitesse du régulateur principal alors que le fonctionnement du régulateur principal est mis en pause. Pour réaliser cela, le moyen de calcul 7d de couple moteur détermine la requête de couple moteur SidewalkTrqReq pour franchir l'obstacle bas en tenant compte d'un modèle mathématique des efforts d'un obstacle bas sur la roue d'un véhicule lors d'un franchissement. Un obstacle bas de type trottoir génère un effort résistif au niveau de la roue proportionnel à sa taille et à la dynamique du véhicule entre autres. Il faut donc produire une consigne de couple moteur permettant de vaincre ce couple résistif qui doit être d'autant plus important que le véhicule est chargé. Par ailleurs, la dynamique des actionneurs est prise en compte par l'intermédiaire de paramètres de réglage. L'expression de la requête de couple moteur SidewalkTrqReq pour franchir l'obstacle bas est alors la suivante :

$$SidewalkTrq\operatorname{Re}q(k) = \left(\frac{\alpha * k * Te}{1 + \alpha * k * Te}\right) * K_{swk} \qquad (Eq. \ 4)$$

Avec :

$\alpha$: Coefficient de rapidité de la consigne de couple, définit la rapidité à laquelle on atteint le niveau de couple désiré. Il s'agit de la constante de temps.
k: Instant d'échantillonnage
Te: Période d'échantillonnage

K_swk: Gain de la consigne, définit le niveau de couple qu'on veut atteindre

Dans un autre mode de réalisation, la requête de couple moteur SidewalkTrqReq pour franchir l'obstacle bas est calculée différemment lors de la détection de l'obstacle et après une temporisation alors que l'obstacle n'est toujours pas franchi.

La requête de couple moteur pour franchir l'obstacle bas lors de la détection SidewalkTrqReq_bf est définie par l'équation suivante :

$$SidewalkTrq\operatorname{Re}q\_bf(k) = \left(\frac{\alpha * k * Te}{1 + \alpha * k * Te}\right) * K1_{swk} \qquad (Eq. \ 5)$$

La requête de couple moteur pour franchir l'obstacle bas après la temporisation SidewalkTrqReq_af est définie par l'équation suivante :

$$SidewalkTrq\operatorname{Re}q\_af(k) = \cdots$$
$$\cdots SidewalkTrq\operatorname{Re}q\_bf(k) + \left(\left(\frac{\alpha * k * Te}{1 + \alpha * k * Te}\right) * K2_{swk}\right)_{After(Tempo)} \qquad (Eq. 6)$$

Avec :

K1_{swk}: Gain de la consigne de couple sur la première partie, définit le niveau de couple qu'on veut atteindre
K2_{swk}: Gain de la consigne de couple sur la deuxième partie, définit le niveau de couple qu'on veut atteindre

Dans le cas où la requête de couple ainsi calculée ne permet toujours pas de passer l'obstacle bas, le moyen de calcul 7d de couple moteur envoie au superviseur 7a un message d'échec SidewalkFailure. A réception de ce message, le superviseur 7a envoie un ordre de freinage StopVehicle au moyen de commande 7b de l'arrêt du véhicule et transmet au régulateur principal 2 un message Cancel_imp indiquant l'impossibilité de passer l'obstacle ce qui induit une annulation de la manoeuvre en cours.

Dans le cas où le franchissement de l'obstacle bas est effectif, le superviseur 7a reçoit un message indiquant le franchissement de l'obstacle bas noté Sidewalk_Crossed du moyen d'estimation 7c de distance. Le superviseur 7a émet alors un message de réinitialisation du régulateur principal noté ResetPIDFFD/TakeOff à destination d'un moyen d'initialisation du régulateur principal 8.

Dans un mode de réalisation, la détection du franchissement effectif par le moyen d'estimation 7c de distance se fait par comparaison de l'estimation de la distance parcourue par le véhicule à un seuil légèrement supérieur aux capacités de détection des systèmes de perception. Cela permet de limiter la manoeuvre en cours dans le cas où l'obstacle est particulièrement bas et n'est pas à l'origine d'une variation de couple notable.

Dans un autre mode de réalisation, la détection du franchissement de l'obstacle bas peut se faire par comparaison de l'accélération longitudinale du véhicule issue d'un capteur équipant tous les véhicules de série avec un seuil calibré. Ce seuil est calculé en fonction du sens de déplacement du véhicule. Dès que l'accélération mesurée est supérieure au seuil, le moyen d'estimation du passage 7c émet le message indiquant le franchissement de l'obstacle bas « SidewalkCrossed » portant une première valeur. Cette méthode de détection du franchissement effectif est plus robuste car, lors d'un franchissement d'obstacle, le véhicule peut effectuer de courts mouvements de va-et-vient qui sont mal interprétés par le moyen d'estimation 7c basé sur une logique de distance. Dans une telle situation, le moyen d'estimation 7c basé sur une logique de distance considère généralement que l'on avance dans un sens puis dans l'autre ce qui empêche de réaliser la condition de distance.

Le moyen d'initialisation du régulateur principal 8 reçoit alors le message de réinitialisation ResetPIDFFD/TakeOff et émet un message à destination du régulateur principal 2, référencé SwkTrqReset sur la figure 2, afin de commander la réinitialisation du régulateur principal 2, l'annulation de la requête de couple moteur SidewalkTrqReq pour franchir l'obstacle bas et la reprise du fonctionnement du régulateur principal 2 tel qu'illustré par la figure 1 Le traitement du message de réinitialisation ResetPIDFFD/Take par le moyen d'initialisation du régulateur principal 8 s'explique par le besoin de faire toute cette étape de mise en pause et de réinitialisation du régulateur principal 2 uniquement aux instants de commutation de SidewalkDetected et ResetPIDFFD/TakeOff vers une première valeur et non de façon continue.

**Revendications**

1. Système de commande d'un véhicule automobile pour le franchissement d'un obstacle bas coopérant avec un régulateur principal (2) d'aide au stationnement d'un véhicule automobile comprenant un contrôleur de vitesse, ledit système comprenant

   un moyen de détection (6) d'obstacle bas configuré pour déterminer la présence d'un obstacle bas lors du fonctionnement du régulateur d'aide au stationnement et suspendre le fonctionnement du régulateur principal (2),

   un moyen de commande (7) de franchissement d'obstacle bas, configuré pour déterminer une requête de couple moteur pour franchir l'obstacle bas à réception d'un signal de détection d'obstacle bas du moyen de détection (6) d'obstacle bas, la requête de couple moteur pour franchir l'obstacle bas étant transmise au contrôleur de vitesse du régulateur principal (2), et pour déterminer un franchissement effectif de l'obstacle bas, et

   un moyen d'initialisation (8) du régulateur principal (2) configuré pour commander la réinitialisation du régulateur principal (2), l'annulation de la requête de couple moteur pour franchir l'obstacle bas et la reprise du fonctionnement du régulateur principal (2) à réception d'un message de franchissement effectif de l'obstacle bas, **caractérisé en ce que** le moyen de détection (6) d'obstacle bas comprend:

   un moyen de détection (6a) de vitesse configuré pour émettre en sortie une première valeur lorsque la vitesse estimée du véhicule devient inférieure à une vitesse de seuil,

   un moyen de détection (6b) de la distance restante configuré pour émettre en sortie une première valeur lorsque la distance restante à parcourir reçue du régulateur principal (2) est supérieure à un seuil de distance,

   un moyen de détection (6c) de condition d'état configuré pour émettre en sortie une première valeur lorsque l'étape actuelle de fonctionnement du régulateur principal (2) est une étape de régulation de la vitesse du véhicule,

   un moyen de détection (6d) de condition odométrique configuré pour émettre en sortie une première valeur lorsque les données odométriques indiquent que le véhicule est immobile,

   un moyen de détection (6e) de condition de requête de couple configuré pour émettre en sortie une première valeur lorsque la requête de couple à la roue reçue du régulateur principal (2) est supérieure à un seuil de requête de couple à la roue, afin de s'assurer de la volonté du conducteur ou du système de faire avancer le véhicule dans le sens du rapport engagé,

   une porte logique ET (6f) configurée pour émettre en sortie une première valeur lorsqu'une première valeur est reçue simultanément du moyen de détection (6d) de condition odométrique et du moyen de détection (6e) de condition de requête de couple,

   un moyen de temporisation (6g) configuré pour déterminer si la première valeur est reçue de la porte logique ET (6f) pendant une durée prédéterminée, et, si tel est le cas, pour émettre en sortie une première valeur,

   une deuxième porte logique ET (6h) configurée pour émettre en sortie une première valeur lorsqu'une première valeur est reçue simultanément du moyen de détection (6a) de vitesse, le moyen de détection (6b) de la distance restante, le moyen de détection (6c) de condition d'état et le moyen de temporisation (6g), et

   un deuxième moyen de temporisation (6i) configuré pour déterminer si la première valeur est reçue de la deuxième porte logique ET (6h) pendant une durée prédéterminée, et, si tel est le cas, pour émettre en sortie le signal de détection d'obstacle bas.

2. Système selon la revendication 1,

   dans lequel le moyen de commande (7) de franchissement d'obstacle bas comprend
   un superviseur (7a) recevant en entrée le signal de détection d'obstacle bas,
   un moyen de commande (7b) de l'arrêt du véhicule,
   un moyen d'estimation (7c) de distance,
   un moyen de calcul (7d) de couple moteur configuré pour déterminer la requête de couple moteur pour franchir l'obstacle bas,
   le superviseur (7a) étant apte à commander le moyen de commande (7b) de l'arrêt du véhicule, le moyen d'estimation (7c) de distance et le moyen de calcul (7d) de couple moteur de sorte à émettre un ordre de freinage, à déterminer la distance parcourue, à déterminer si l'obstacle bas a été franchi en fonction de la distance parcourue, à déterminer une requête de couple à la roue si l'obstacle n'a pas été franchi, à déterminer un message de réinitialisation du régulateur principal (2) si l'obstacle a été franchi.

**3.** Procédé de commande d'un véhicule automobile pour le franchissement d'un obstacle bas coopérant avec un procédé de commande d'aide au stationnement d'un véhicule automobile à contrôle de vitesse, comprenant des étapes au cours desquelles :

on détecte la présence d'un obstacle bas sur lequel le véhicule est bloqué et on commande la suspension du fonctionnement du
procédé de commande d'aide au stationnement,
on commande le franchissement de l'obstacle bas en déterminant une requête de couple pour franchir l'obstacle bas,
on commande la réinitialisation du procédé de commande d'aide au stationnement, l'annulation de la requête de couple moteur pour franchir l'obstacle bas et la reprise du fonctionnement du procédé de commande d'aide au stationnement ;
**caractérisé en ce que**,
pour détecter la présence d'un obstacle bas sur lequel le véhicule est bloqué, on réalise les étapes suivantes :

on détermine qu'une première variable est égale à une première valeur si toutes les conditions d'un premier groupe de conditions sont vérifiées,
on détermine qu'une deuxième variable est égale à une première valeur si toutes les conditions d'un deuxième groupe de conditions sont vérifiées pendant une durée prédéterminée,
on détermine que le véhicule a passé l'obstacle bas si pendant une durée prédéterminée, la première variable et la deuxième variable prennent la première valeur,
le premier groupe de conditions comprenant :

- déterminer si la vitesse estimée du véhicule est inférieure à une vitesse de seuil,
- déterminer si la distance restante à parcourir par le véhicule reçue du procédé de commande d'aide au stationnement est supérieure à un seuil de distance restante à parcourir
- déterminer si l'état actuel du procédé de commande d'aide au stationnement est égal à l'étape de régulation de la vitesse du véhicule,

le deuxième groupe de conditions comprenant :

- déterminer si le véhicule est immobile en comparant les données odométriques à des valeurs de seuil,
- déterminer si la requête de couple à la roue reçue du procédé de commande d'aide au stationnement est supérieure à un seuil de requête de couple à la roue.

**4.** Procédé de commande selon la revendication 3, dans lequel, pour commander le franchissement de l'obstacle bas,

on émet un ordre de freinage,
on détermine la distance parcourue,
on détermine si l'obstacle bas a été franchi en fonction de la distance parcourue,
si tel n'est pas le cas, on détermine une requête de couple pour franchir l'obstacle bas,
si tel est le cas, on réinitialise le procédé de commande d'aide au stationnement.

**5.** Procédé de commande selon la revendication 4, dans lequel on détermine la requête de couple moteur pour franchir l'obstacle bas en fonction d'un modèle mathématique des efforts d'un obstacle bas sur la roue d'un véhicule lors d'un franchissement et en fonction de la dynamique des actionneurs.

**6.** Procédé de commande selon la revendication 5, dans lequel la requête de couple moteur pour franchir l'obstacle bas comprend une première composante déterminée lors de la détection de l'obstacle et une seconde composante déterminée après une durée prédéterminée à compter de l'instant de détection de l'obstacle.

**7.** Procédé de commande selon la revendication 5, dans lequel on compense la requête de couple à la roue pour franchir l'obstacle bas pour tenir compte de la pente en ne considérant que la composante horizontale de la requête de couple.

**8.** Procédé de commande selon l'une quelconque des revendications 4 à 7, dans lequel lorsque la requête de couple pour franchir l'obstacle bas déterminée ne permet toujours pas de passer l'obstacle bas,
on commande l'arrêt du véhicule par freinage et on transmet au procédé de commande d'aide au stationnement un message indiquant l'impossibilité de passer l'obstacle induisant une annulation de la manoeuvre en cours.

9.  Procédé de commande selon la revendication 4, dans lequel, lorsque le franchissement de l'obstacle bas est effectif, on émet un message de réinitialisation du régulateur principal et on annule la requête de couple moteur pour franchir l'obstacle bas.

10. Procédé de commande selon l'une quelconque des revendications 4 à 9, dans lequel on détecte le franchissement effectif de l'obstacle bas lorsque l'estimation de la distance parcourue par le véhicule est supérieure à un seuil prédéterminé.

11. Procédé de commande selon la revendication 10, dans lequel le seuil prédéterminé est égal à une distance supérieure aux capacités de détection des systèmes de perception employés pour estimer la distance entre le véhicule et l'obstacle bas.

12. Procédé de commande selon l'une quelconque des revendications 4 à 9, dans lequel on détecte le franchissement effectif de l'obstacle bas en comparant une mesure de l'accélération longitudinale du véhicule à un seuil calibré.

13. Procédé selon la revendication 12, dans lequel le seuil est calculé en fonction du sens de déplacement du véhicule.

**Patentansprüche**

1.  System zur Steuerung eines Kraftfahrzeugs zur Überwindung eines niedrigen Hindernisses, welches mit einem Hauptregler (2) der Einparkhilfe eines Kraftfahrzeugs zusammenwirkt, der einen Geschwindigkeitsregler umfasst, wobei das System umfasst:

    ein Mittel zur Detektion (6) eines niedrigen Hindernisses, das dafür ausgelegt ist, das Vorhandensein eines niedrigen Hindernisses während des Betriebs des Einparkhilfe-Reglers zu bestimmen und den Betrieb des Hauptreglers (2) zu unterbrechen,
    ein Mittel zur Steuerung (7) der Überwindung eines niedrigen Hindernisses, das dafür ausgelegt ist, eine Motordrehmomentanforderung zum Überwinden des niedrigen Hindernisses bei Empfang eines Detektionssignals eines niedrigen Hindernisses von dem Mittel zur Detektion (6) eines niedrigen Hindernisses zu bestimmen, wobei die Motordrehmomentanforderung zum Überwinden des niedrigen Hindernisses zum Geschwindigkeitsregler des Hauptreglers (2) übertragen wird, und eine tatsächliche Überwindung des niedrigen Hindernisses zu bestimmen, und
    ein Mittel zur Initialisierung (8) des Hauptreglers (2), das dafür ausgelegt ist, die Reinitialisierung des Hauptreglers (2), die Annullierung der Motordrehmomentanforderung zum Überwinden des niedrigen Hindernisses und die Wiederaufnahme des Betriebs des Hauptreglers (2) bei Empfang einer Nachricht über die tatsächliche Überwindung des niedrigen Hindernisses zu steuern, **dadurch gekennzeichnet, dass** das Mittel zur Detektion (6) eines niedrigen Hindernisses umfasst:

    ein Mittel zur Detektion (6a) der Geschwindigkeit, das dafür ausgelegt ist, einen ersten Wert auszugeben, wenn die geschätzte Geschwindigkeit des Fahrzeugs niedriger als eine Schwellenwertgeschwindigkeit wird,
    ein Mittel zur Detektion (6b) der verbleibenden Entfernung, das dafür ausgelegt ist, einen ersten Wert auszugeben, wenn die zurückzulegende verbleibende Entfernung, die vom Hauptregler (2) empfangen wird, größer als ein Entfernungsschwellenwert ist,
    ein Mittel zur Detektion (6c) des Statuszustands, das dafür ausgelegt ist, einen ersten Wert auszugeben, wenn die aktuelle Betriebsphase des Hauptreglers (2) eine Phase der Regelung der Geschwindigkeit des Fahrzeugs ist, ein Mittel zur Detektion (6d) des die Wegmessung betreffenden Zustands, das dafür ausgelegt ist, einen ersten Wert auszugeben, wenn die odometrischen Daten anzeigen, dass das Fahrzeug bewegungslos ist,
    ein Mittel zur Detektion (6e) des Drehmomentanforderungszustands, das dafür ausgelegt ist, einen ersten Wert auszugeben, wenn die Raddrehmomentanforderung, die vom Hauptregler (2) empfangen wird, größer als ein Schwellenwert der Raddrehmomentanforderung ist, um sich zu vergewissern, dass der Fahrer oder das System gewillt ist, das Fahrzeug in der Richtung des eingelegten Ganges fortzubewegen,
    ein UND-Gatter (6f), das dafür ausgelegt ist, einen ersten Wert auszugeben, wenn ein erster Wert gleichzeitig von dem Mittel zur Detektion (6d) des die Wegmessung betreffenden Zustands und von dem Mittel zur Detektion (6e) des Drehmomentanforderungszustands empfangen wird, ein Verzögerungsmittel (6g), das dafür ausgelegt ist zu bestimmen, ob der erste Wert von dem UND-Gatter (6f) während einer vorbestimmten Dauer empfangen wird, und wenn dies der Fall ist, einen ersten Wert auszugeben,

ein zweites UND-Gatter (6h), das dafür ausgelegt ist, einen ersten Wert auszugeben, wenn ein erster Wert gleichzeitig von dem Mittel zur Detektion (6a) der Geschwindigkeit, dem Mittel zur Detektion (6b) der verbleibenden Entfernung, dem Mittel zur Detektion (6c) des Statuszustands und dem Verzögerungsmittel (6g) empfangen wird, und

ein zweites Verzögerungsmittel (6i), das dafür ausgelegt ist zu bestimmen, ob der erste Wert von dem zweiten UND-Gatter (6h) während einer vorbestimmten Dauer empfangen wird, und wenn dies der Fall ist, das Detektionssignal eines niedrigen Hindernisses auszugeben.

2. System nach Anspruch 1, wobei das Mittel zur Steuerung (7) der Überwindung eines niedrigen Hindernisses umfasst:

eine Überwachungsvorrichtung (7a), die am Eingang das Detektionssignal eines niedrigen Hindernisses empfängt,

ein Mittel zur Steuerung (7b) des Stoppens des Fahrzeugs,

ein Mittel zur Schätzung (7c) der Entfernung,

ein Mittel zur Berechnung (7d) des Motordrehmoments, das dafür ausgelegt ist, die Motordrehmomentanforderung zum Überwinden des niedrigen Hindernisses zu bestimmen,

wobei die Überwachungsvorrichtung (7a) in der Lage ist, das Mittel zur Steuerung (7b) des Stoppens des Fahrzeugs, das Mittel zur Schätzung (7c) der Entfernung und das Mittel zur Berechnung (7d) des Motordrehmoments so zu steuern, dass ein Bremsbefehl ausgegeben wird, die zurückgelegte Entfernung bestimmt wird, in Abhängigkeit von der zurückgelegten Entfernung bestimmt wird, ob das niedrige Hindernis überwunden worden ist, eine Raddrehmomentanforderung bestimmt wird, falls das Hindernis nicht überwunden worden ist, und eine Nachricht zur Reinitialisierung des Hauptreglers (2) bestimmt wird, falls das Hindernis überwunden worden ist.

3. Verfahren zur Steuerung eines Kraftfahrzeugs zur Überwindung eines niedrigen Hindernisses, welches mit einem Verfahren zur Steuerung der Einparkhilfe eines Kraftfahrzeugs mit Geschwindigkeitsregelung zusammenwirkt, Schritte umfassend, in welchen:

das Vorhandensein eines niedrigen Hindernisses detektiert wird, an dem das Fahrzeug blockiert ist, und die Unterbrechung der Durchführung des

Verfahren zur Steuerung der Einparkhilfe bewirkt wird,

die Überwindung des niedrigen Hindernisses gesteuert wird, indem eine Drehmomentanforderung zum Überwinden des niedrigen Hindernisses bestimmt wird,

die Reinitialisierung des Verfahren zur Steuerung der Einparkhilfe, die Annullierung der Motordrehmomentanforderung zum Überwinden des niedrigen Hindernisses und die Wiederaufnahme der Durchführung des Verfahren zur Steuerung der Einparkhilfe bewirkt wird;

**dadurch gekennzeichnet, dass**, um das Vorhandensein eines niedrigen Hindernisses zu detektieren, an dem das Fahrzeug blockiert ist, die folgenden Schritte ausgeführt werden:

es wird festgelegt, dass eine erste Variable einen ersten Wert hat, falls alle Bedingungen einer ersten Gruppe von Bedingungen erfüllt sind,

es wird festgelegt, dass eine zweite Variable einen ersten Wert hat, falls alle Bedingungen einer zweiten Gruppe von Bedingungen während einer vorbestimmten Dauer erfüllt sind,

es wird bestimmt, dass das Fahrzeug das Hindernis passiert hat, falls während einer vorbestimmten Dauer die erste Variable und die zweite Variable den ersten Wert annehmen,

wobei die erste Gruppe von Bedingungen umfasst:

- Bestimmen, ob die geschätzte Geschwindigkeit des Fahrzeugs niedriger als eine Schwellenwertgeschwindigkeit ist,

- Bestimmen, ob die von dem Fahrzeug zurückzulegende verbleibende Entfernung, die von dem Verfahren zur Steuerung der Einparkhilfe empfangen wird, größer als ein Schwellenwert der zurückzulegenden verbleibenden Entfernung ist,

- Bestimmen, ob der aktuelle Status des Verfahrens zur Steuerung der Einparkhilfe gleich der Phase der Regelung der Geschwindigkeit des Fahrzeugs ist,

wobei die zweite Gruppe von Bedingungen umfasst:

- Bestimmen, ob das Fahrzeug bewegungslos ist, indem die odometrischen Daten mit Schwellenwerten verglichen werden,
- Bestimmen, ob die Raddrehmomentanforderung, die von dem Verfahren zur Steuerung der Einparkhilfe empfangen wird, größer als ein Schwellenwert der Raddrehmomentanforderung ist.

4. Verfahren zur Steuerung nach Anspruch 3, wobei, um die Überwindung des niedrigen Hindernisses zu steuern,

ein Bremsbefehl ausgegeben wird,
die zurückgelegte Entfernung bestimmt wird,
in Abhängigkeit von der zurückgelegten Entfernung bestimmt wird, ob das niedrige Hindernis überwunden worden ist,
wenn dies nicht der Fall ist, eine Drehmomentanforderung bestimmt wird, um das niedrige Hindernis zu überwinden, wenn dies der Fall ist, das Verfahren zur Steuerung der Einparkhilfe reinitialisiert wird.

5. Verfahren zur Steuerung nach Anspruch 4, wobei die Motordrehmomentanforderung zum Überwinden des niedrigen Hindernisses in Abhängigkeit von einem mathematischen Modell der von einem niedrigen Hindernis auf das Rad eines Fahrzeugs bei der Überwindung ausgeübten Kräfte und in Abhängigkeit von der Dynamik der Aktuatoren bestimmt wird.

6. Verfahren zur Steuerung nach Anspruch 5, wobei die Motordrehmomentanforderung zum Überwinden des niedrigen Hindernisses eine erste Komponente, die bei der Detektion des Hindernisses bestimmt wird, und eine zweite Komponente, die nach einer vorbestimmten Dauer ab dem Zeitpunkt der Detektion des Hindernisses bestimmt wird, umfasst.

7. Verfahren zur Steuerung nach Anspruch 5, wobei die Raddrehmomentanforderung zum Überwinden des niedrigen Hindernisses kompensiert wird, um den Anstieg zu berücksichtigen, indem nur die horizontale Komponente der Drehmomentanforderung betrachtet wird.

8. Verfahren zur Steuerung nach einem der Ansprüche 4 bis 7, wobei, wenn die bestimmte Drehmomentanforderung zum Überwinden des niedrigen Hindernisses noch immer nicht ermöglicht, das niedrige Hindernis zu passieren, das Stoppen des Fahrzeugs durch Bremsung bewirkt wirkt und an das Verfahren zur Steuerung der Einparkhilfe eine Nachricht übertragen wird, die auf die Unmöglichkeit hinweist, das Hindernis zu passieren, und zu einer Annullierung des ausgeführten Manövers führt.

9. Verfahren zur Steuerung nach Anspruch 4, wobei, wenn die Überwindung des niedrigen Hindernisses tatsächlich erfolgt ist, eine Nachricht zur Reinitialisierung des Hauptreglers ausgegeben wird und die Motordrehmomentanforderung zum Überwinden des niedrigen Hindernisses annulliert wird.

10. Verfahren zur Steuerung nach einem der Ansprüche 4 bis 9, wobei die tatsächliche Überwindung des niedrigen Hindernisses detektiert wird, wenn die Schätzung der von dem Fahrzeug zurückgelegten Entfernung größer als ein vorbestimmter Schwellenwert ist.

11. Verfahren zur Steuerung nach Anspruch 10, wobei der vorbestimmte Schwellenwert gleich einer Entfernung ist, die größer als die Detektionsfähigkeiten der Wahrnehmungssysteme ist, die verwendet werden, um die Entfernung zwischen dem Fahrzeug und dem niedrigen Hindernis zu schätzen.

12. Verfahren zur Steuerung nach einem der Ansprüche 4 bis 9, wobei die tatsächliche Überwindung des niedrigen Hindernisses detektiert wird, indem ein Messwert der Längsbeschleunigung des Fahrzeugs mit einem kalibrierten Schwellenwert verglichen wird.

13. Verfahren nach Anspruch 12, wobei der Schwellenwert in Abhängigkeit von der Bewegungsrichtung des Fahrzeugs berechnet wird.

**Claims**

1. System for controlling a motor vehicle for overcoming a low obstacle, interacting with a main controller (2) for assistance with the parking of a motor vehicle comprising a speed controller, said system comprising:

   a low obstacle detection means (6), configured for determining the presence of a low obstacle during the operation of the parking assistance controller and for suspending the operation of the main controller (2),
   a control means (7) for overcoming a low obstacle, configured for determining an engine torque request for overcoming the low obstacle on reception of a low obstacle detection signal from the low obstacle detection means (6), the engine torque request for overcoming the low obstacle being transmitted to the speed controller of the main controller (2), and for determining the successful overcoming of the low obstacle, and
   a means (8) for initializing the main controller (2), configured for commanding the reinitialization of the main controller (2), the cancellation of the engine torque request for overcoming the low obstacle, and the resumption of the operation of the main controller (2) on reception of a message indicating the successful overcoming of the low obstacle, **characterized in that** the low obstacle detection means (6) comprises:

   a speed detection means (6a), configured for transmitting a first value from its output when the estimated speed of the vehicle becomes lower than a threshold speed,
   a means (6b) for detecting the remaining distance, configured for transmitting a first value from its output when the remaining distance to be travelled, received from the main controller (2), is greater than a distance threshold,
   a means (6c) for detecting the state condition, configured for transmitting a first value from its output when the current operating step of the main controller (2) is a step of controlling the speed of the vehicle,
   a means (6d) for detecting the odometry condition, configured for transmitting a first value from its output when the odometry data indicate that the vehicle is stationary,
   a means (6e) for detecting the torque request condition, configured for transmitting a first value from its output when the wheel torque request received from the main controller (2) is above a wheel torque request threshold, to ascertain whether the driver or the system wishes to cause the vehicle to advance in the direction of the gear engaged,
   an AND logic gate (6f), configured for transmitting a first value from its output when a first value is received simultaneously from the odometry condition detection means (6d) and from the torque request condition detection means (6e),
   a timing means (6g), configured for determining whether the first value is received from the AND logic gate (6f) during a predetermined time interval, and, if this is the case, for transmitting a first value from its output,
   a second AND logic gate (6h), configured for transmitting a first value from its output when a first value is received simultaneously from the speed detection means (6a), the remaining distance detection means (6b), the state condition detection means (6c), and the timing means (6g), and
   a second timing means (6i), configured for determining whether the first value is received from the second AND logic gate (6h) during a predetermined time interval, and, if this is the case, for transmitting the low obstacle detection signal from its output.

2. System according to Claim 1, wherein the control means (7) for overcoming a low obstacle comprises:

   a master controller (7a) receiving at its input the low obstacle detection signal,
   a means (7b) for controlling the stopping of the vehicle, a means (7c) for estimating distance,
   an engine torque calculation means (7d) configured for determining the engine torque request for overcoming the low obstacle,
   the master controller (7a) being capable of controlling the vehicle stop control means (7b), the distance estimation means (7c) and the engine torque calculation means (7d), for the purpose of transmitting a braking command, determining the distance travelled, determining whether the low obstacle has been overcome on the basis of the distance travelled, determining a wheel torque request if the obstacle has not been overcome, and determining a main controller (2) reinitialization message if the obstacle has been overcome.

3. Method for controlling a motor vehicle for overcoming a low obstacle, interacting with a method of controlling assistance for the parking of a motor vehicle with speed control, comprising steps in which:

   the presence of a low obstacle on which the vehicle is stopped is detected, and the suspension of the operation of the
parking assistance control method is commanded,
the overcoming of the low obstacle is commanded, by determining a torque request for overcoming the low obstacle,
the reinitialization of the parking assistance control method is commanded, together with the cancellation of the engine torque request for overcoming the low obstacle and the resumption of the operation of the parking assistance control method;
**characterized in that**, in order to detect the presence of a low obstacle on which the vehicle is stopped, the following steps are executed:

it is determined that a first variable is equal to a first value if all the conditions of a first group of conditions are verified,
it is determined that a second variable is equal to a first value if all the conditions of a second group of conditions are verified during a predetermined time interval,
it is determined that the vehicle has passed the low obstacle if, during a predetermined time interval, the first variable and the second variable take the first value,
the first group of conditions comprising:

- determining whether the estimated speed of the vehicle is below a threshold speed,
- determining whether the remaining distance to be travelled by the vehicle, received from the parking assistance control method, is above a threshold of remaining distance to be travelled,
- determining whether the current state of the parking assistance control method is equal to the step of controlling the speed of the vehicle,

the second group of conditions comprising:

- determining whether the vehicle is stationary, by comparing the odometry data with threshold values,
- determining whether the wheel torque request received from the parking assistance control method is above a wheel torque request threshold.

4. Control method according to Claim 3, wherein, in order to control the overcoming of the low obstacle:

a braking command is transmitted,
the distance travelled is determined,
it is determined whether the low obstacle has been overcome on the basis of the distance travelled,
if this is not the case, a torque request for overcoming the low obstacle is determined,
if this is the case, the parking assistance control method is reinitialized.

5. Control method according to Claim 4, wherein the engine torque request for overcoming the low obstacle is determined on the basis of a mathematical model of the forces of a low obstacle on the wheel of a vehicle at the time of overcoming and on the basis of the dynamics of the actuators.

6. Control method according to Claim 5, wherein the engine torque request for overcoming the low obstacle comprises a first component determined when the obstacle is detected and a second component determined after a predetermined time interval reckoned from the instant of detection of the obstacle.

7. Control method according to Claim 5, wherein the wheel torque request for overcoming the low obstacle is compensated for in order to allow for the gradient, by considering only the horizontal component of the torque request.

8. Control method according to any one of Claims 4 to 7, wherein, if the determined torque request for overcoming the low obstacle still does not enable the low obstacle to be crossed,
the stopping of the vehicle by braking is commanded, and a message is transmitted to the parking assistance control method, indicating that the obstacle cannot be crossed, causing the current manoeuvre to be cancelled.

9. Control method according to Claim 4, wherein, if the overcoming of the low obstacle is successful, a message for reinitializing the main controller is transmitted, and the engine torque request for overcoming the low obstacle is cancelled.

EP 3 746 343 B1

10. Control method according to any one of Claims 4 to 9, wherein the successful overcoming of the low obstacle is detected when the estimation of the distance travelled by the vehicle is above a predetermined threshold.

11. Control method according to Claim 10, wherein the predetermined threshold is equal to a distance that is greater than the detection capabilities of the perception systems used for estimating the distance between the vehicle and the low obstacle.

12. Control method according to any one of Claims 4 to 9, wherein the successful overcoming of the low obstacle is detected by comparing a measurement of the longitudinal acceleration of the vehicle with a calibrated threshold.

13. Method according to Claim 12, wherein the threshold is calculated on the basis of the direction of movement of the vehicle.

14

# FIG.1

# FIG.2

# FIG.3

Veh_speed → 6a → 6h

StoppingDistance → 6b → 6h

Regulatorstate → 6c → 6h

Veh_odo → 6d → 6f

PWTRequestedTrq → 6e → 6f

6f → 6g → 6h

6h → 6i → SidewalkDetected

EP 3 746 343 B1

# FIG.4

SidewalkDetected → 7b

StopVehicle

SidewalkFailure

7a

7d → SidewalkTrqReq

→ ResetPIDFFD/TakeOff
→ Cancel_imp

Crosseddistance_initialisation    SidewalkCrossed

7c

EP 3 746 343 B1

**EP 3 746 343 B1**

## RÉFÉRENCES CITÉES DANS LA DESCRIPTION

**Documents brevets cités dans la description**

- KR 20130089502
- EP 3219582 A
- US 2016207528 A
- DE 102013210672 A1
- EP 2327574 A1
- FR 1751873